# EUROPÄISCHE PATENTSCHRIFT

(11) **EP 4 537 418 B1**
(45) Veröffentlichungstag und Bekanntmachung des Hinweises auf die Patenterteilung: **18.02.2026**
(21) Anmeldenummer: 23729741.1
(22) Anmeldetag: 30.05.2023
(51) Int. Cl.: B60L 3/00, H01M 50/35, B62D 25/20, B60K 1/04, B60L 50/64, H01M 50/30

(54) **UNTERFAHRSCHUTZ MIT WENIGSTENS EINEM ENTGASUNGSKANAL UND TRAKTIONSBATTERIEANORDNUNG MIT SOLCHEM UNTERFAHRSCHUTZ**
UNDERRIDE GUARD WITH AT LEAST ONE DEGASSING CHANNEL, AND TRACTION BATTERY ARRANGEMENT WITH SUCH AN UNDERRIDE GUARD
PROTECTION ANTI-ENCASTREMENT COMPORTANT AU MOINS UN CANAL DE DÉGAZAGE ET ENSEMBLE BATTERIE DE TRACTION DOTÉ D'UNE TELLE PROTECTION ANTI-ENCASTREMENT

(30) Priorität: 08.06.2022 DE 102022114365
(43) Veröffentlichungstag der Anmeldung: 16.04.2025
(73) Patentinhaber: AUDI AG, 85057 Ingolstadt (DE)
(72) Erfinder: RAUSCH, Julius, 74074 Heilbronn (DE)
(86) Internationale Anmeldenummer: PCT/EP2023/064429
(87) Internationale Veröffentlichungsnummer: WO 2023/237383

(56) Entgegenhaltungen:
- WO-A1-2023/001395
- WO-A1-2023/072575
- DE-A1- 102020 106 780

## Beschreibung

Die Erfindung betrifft einen Unterfahrschutz für eine Traktionsbatterie eines Kraftfahrzeugs gemäß Oberbegriff des Patentanspruchs 1. Die Erfindung betrifft ferner eine Traktionsbatterieanordnung mit einem Unterfahrschutz.

Ein Unterfahrschutz betreffender Art ist dafür vorgesehen, eine insbesondere im Bereich des Karosseriebodens eines Kraftfahrzeugs angeordnete Antriebs- bzw. Traktionsbatterie (für den elektrischen Antrieb) vor äußeren Einwirkungen zu schützen. Darüber hinaus kann ein solcher Unterfahrschutz bei entsprechender Ausgestaltung und Anordnung auch dafür vorgesehen sein, die im Fehlerfall (bspw. einem Kurzschluss) innerhalb der Traktionsbatterie entstehenden Heißgase gezielt abzuleiten (Entgasungsfunktion). Die DE 10 2021 103 378 B3 beschreibt eine Traktionsbatterie für ein Kraftfahrzeug mit einem Batteriegehäuse und einem außerhalb des Aufnahmeraums des Batteriegehäuses angeordneten Entgasungskollektor mit einem Entgasungsraum. Der sogenannte Entgasungsraum ist durch das Batteriegehäuse bzw. den Gehäuseboden sowie einen sogenannten Wärmeschild des Entgasungskollektors begrenzt. Der Entgasungskollektor ist dazu ausgelegt, das über eine Entgasungseinheit aus dem Aufnahmeraum des Batteriegehäuses entlassene Heißgas in den Entgasungsraum aufzunehmen und dort abzukühlen. Außerdem ist ein Auslass mit Öffnungen vorgesehen, die einen Gasaustausch zwischen dem Entgasungsraum und der Umgebung ermöglichen. Der Wärmeschild kann zusätzlich die Funktion eines Unterfahrschutzes für die Traktionsbatterie übernehmen.

Die nächstliegende DE 10 2020 106 780 A1 beschreibt eine Batterie mit einem Gehäuseunterteil, das einen Boden und oberhalb des Bodens verlaufende Modulhalterungen aufweist, wobei die Modulhalterungen auch als Entgasungskanäle fungieren. Eine solche Modulhalterung kann beispielsweise als ein extrudiertes Strangpressprofil ausgebildet sein.

Der Erfindung liegt die Aufgabe zugrunde, einen Unterfahrschutz für eine Traktionsbatterie anzugeben, der leicht ist und eine effektive Entgasung des Entgasungsraums ermöglicht.

Die Aufgabe wird gelöst durch den erfindungsgemäßen Unterfahrschutz des Patentanspruchs 1. Mit dem nebengeordneten Patentanspruch erstreckt sich die Erfindung auch auf eine erfindungsgemäße Traktionsbatterieanordnung, die einen erfindungsgemäßen Unterfahrschutz umfasst. Zusätzliche Merkmale der Erfindung ergeben sich analog für beide Erfindungsgegenstände aus den abhängigen Patentansprüchen, der nachfolgenden Erfindungsbeschreibung (dies schließt ausdrücklich auch optional und beispielhaft beschriebene Merkmale ein) und den Figuren, wobei dies für alle Merkmale, auch losgelöst von konkreten Merkmalskombinationen, gelten soll.

Der erfindungsgemäße Unterfahrschutz für eine Traktionsbatterie weist ein schildartiges bzw. plattenartiges Grundmodul auf, das auch als schildartiges bzw. plattenartiges Grundelement bezeichnet werden kann. Dieses Grundmodul ist dafür vorgesehen, unter Ausbildung eines zumindest als Entgasungsraums fungierenden Zwischenraums unterhalb einer Traktionsbatterie angeordnet zu werden.

Erfindungsgemäß ist vorgesehen, dass das Grundmodul wenigstens ein auf seiner Oberseite angeordnetes Schalenelement aufweist, welches einen auf der Oberseite (des Grundmoduls) verlaufenden Entgasungskanal mit einem geschlossenen Querschnitt zur Ausleitung von Heißgas aus dem Entgasungsraum bildet. Ferner ist vorgesehen, dass dieses Schalenelement als Kunststoff-Metall-Verbundbauteil ausgeführt ist und wenigstens einen gasdurchlässigen Überströmbereich aufweist, innerhalb dessen ein Überströmen des Heißgases vom Entgasungsraum in den Entgasungskanal möglich ist bzw. ermöglicht wird. Die Oberseite des Grundmoduls ist die der Traktionsbatterie zugewandte bzw. zuzuwendende Seite, die auch als Innenseite bezeichnet werden kann.

Bevorzugt weist der erfindungsgemäße Unterfahrschutz mehrere solcher Entgasungskanäle auf, die insbesondere parallel zueinander verlaufen. Die nachfolgenden Erläuterungen gelten analog sowohl für einen Unterfahrschutz mit nur einem Entgasungskanal als auch für einen Unterfahrschutz mit mehreren Entgasungskanälen.

Bevorzugt erstreckt sich der Entgasungskanal in Längs- oder Querrichtung über die gesamte Länge oder Breite des Unterfahrschutzes. Bevorzugt ist der Entgasungskanal an wenigstens einem seiner Enden direkt oder indirekt mit der Umgebung verbunden, wobei am betreffenden Ende ein sich bei Überdruck öffnender Deckel oder dergleichen vorgesehen sein kann. Falls im Fehlerfall Heißgas aus der Traktionsbatterie bzw. dem Batteriegehäuse in den Entgasungsraum zwischen Traktionsbatterie bzw. Batteriegehäuse und Grundmodul des Unterfahrschutzes eintritt, kann dieses Heißgas durch den wenigstens einen gasdurchlässigen Überströmbereich des Schalenelements in den Entgasungskanal einströmen bzw. überströmen und dann über den Entgasungskanal in die Umgebung abströmen. Wegen der dabei stattfindenden Expansion erfolgt zugleich eine vorteilhafte Abkühlung des Heißgases.

Das Schalenelement ist nicht vollständig, sondern nur bereichsweise gasdurchlässig ausgebildet, wobei wenigstens ein gasdurchlässiger Bereich vorgesehen ist, der als Überströmbereich bezeichnet wird. Innerhalb dieses Überströmbereichs kann das Heißgas aus dem Entgasungsraum in den Entgasungskanal überströmen bzw. einströmen. Im betreffenden Abschnitt weist der Entgasungskanal einen umfänglich geschlossenen Querschnitt mit teilweise gasdurchlässiger Wandung auf, was auch als quasi-geschlossener Querschnitt bezeichnet werden kann. Das Schalenelement ist ansonsten, d. h. außerhalb des wenigstens einen Überströmbereichs, gasundurchlässig. Dies ermöglicht einerseits eine steife und stabile Ausführung des Schalenelements und andererseits eine gezielte Strömungsführung bzw. eine definierte Gasführung des Heißgases.

Bei dem Schalenelement handelt es sich um ein Kunststoff-Metall-Verbundbauteil. Damit ist gemeint, dass das Schalenelement aus Kunststoff, insbesondere thermoplastischem Kunststoff (bspw. aus Polypropylen), oder auch aus faserverstärktem Kunststoff, insbesondere faserverstärktem thermoplastischem Kunststoff (bspw. glasfaserverstärktes Polypropylen), und aus wenigstens einer Metallkomponente, bspw. einem Metalldrahtgitter oder Lochblech (s. u.), gebildet ist. Der verwendete Kunststoff weist bevorzugt eine V0-Branschutzklassifizierung auf. Das Schalenelement kann somit leicht und stabil bzw. in Leichtbauweise ausgeführt werden. Ferner können für dessen Herstellung gängige Herstellungsverfahren angewendet werden, wie das Spritzgießen. Die Herstellung kann somit vergleichsweise einfach und kostengünstig erfolgen. Das Schalenelement kann optional, zumindest teilweise, auch aus einem Organoblech oder dergleichen gebildet sein. Das Schalenelement weist bevorzugt eine Wandstärke bzw. -dicke von 1,5 mm bis 4,0 mm auf.

Das Schalenelement ist in geeigneter Weise am Grundmodul befestigt. Bevorzugt ist das Schalenelement mit dem Grundmodul verklebt oder verschweißt. Insbesondere ist vorgesehen, dass das Schalenelement und das Grundmodul aus demselben Kunststoff, insbesondere thermoplastischen Kunststoff (bspw. Polypropylen, insbesondere glasfaserverstärktes Polypropylen), oder zumindest aus artähnlichen Kunststoffen gefertigt sind. Bevorzugt sind sowohl das Schalenelement als auch das Grundmodul aus thermoplastischem Kunststoff gebildet, woraus sich u. a. Vorteile für das Recycling ergeben.

Erfindungsgemäß ist der wenigstens eine Überströmbereich durch ein offenes Metalldrahtgitter (hierzu gehört auch ein Drahtgewebe, Drahtgeflecht, Drahtgestrick oder dergleichen) oder durch ein offenes Lochblech, womit ein metallisches Lochblech gemeint ist, gebildet. Ein solches Metalldrahtgitter oder Lochblech weist Durchbrüche (Entgasungsdurchbrüche) auf, die einerseits das Überströmen des Heißgases vom Entgasungsraum in den Entgasungskanal ermöglichen und andererseits eine Partikelrückhaltefunktion erfüllen. Das Metalldrahtgitter oder Lochblech ist bevorzugt aus Stahl, d. h. aus Stahldrähten bzw. einem Stahlblech, gebildet.

Erfindungsgemäß ist das Schalenelement als Spritzgussteil ausgebildet bzw. hergestellt, wobei das Metalldrahtgitter oder Lochblech (s. o.) als umspritzter oder teilweise überspritzter Einleger, d. h. als Metalldrahtgitter- oder Lochblech-Einleger, in das Spritzgussteil integriert ist. Damit ist gemeint, dass der Metalldrahtgitter- oder Lochblech-Einleger an seinem Rand mit dem spritzgegossenen Kunststoff verbunden ist oder dass der Metalldrahtgitter- oder Lochblech-Einleger, der sich auch über die gesamte Fläche des Schalenelements erstrecken kann, flächendeckend mit Kunststoff überspritzt ist, mit Ausnahme des wenigstens einen Überströmbereichs (der offen bleibt bzw. nicht überspritzt ist). Falls das Schalenelement mehrere Überströmbereiche aufweist, kann dies durch mehrere umspritzte Metalldrahtgitter- oder Lochblech-Einleger oder durch einen einzelnen überspritzten Metalldrahtgitter- oder Lochblech-Einleger realisiert sein. Ein solches als Spritzgussteil ausgebildetes Schalenelement mit wenigstens einem umspritzten oder überspritzten Metalldrahtgitter- oder Lochblech-Einleger ist ein Kunststoff-Metall-Verbundbauteil in Spritzguss-Metall-Hybridbauweise.

Im Entgasungskanal können Stützrippen und/oder Stützdome zur Abstützung des Schalenelements vorhanden sein. Die vorzugsweise aus Kunststoff, insbesondere thermoplastischem Kunststoff, gebildeten Stützrippen und/oder Stützdome können Bestandteil des Grundmoduls oder des Schalenelements sein. Insbesondere ist vorgesehen, dass die Stützrippen und/oder Stützdome an der Unterseite des Schalenelements angespritzt sind. Die Stützrippen und/oder Stützdome können aber auch als separate Bauteile ausgebildet und in geeigneter Weise am Grundmodul und/oder Schalenelement befestigt sein. Über die Stützrippen und/oder Stützdome kann auch eine Befestigung des Schalenelements erfolgen. Durch solche Stützrippen und/oder Stützdome kann auch die Gesamtsteifigkeit des Unterfahrschutzes erhöht werden.

Bevorzugt ist das Schalenelement als trapezförmiges oder zumindest als trapezähnliches Profilelement bzw. als Trapezprofil ausgebildet (im Weiteren auch als trapezförmiges Schalenelement bezeichnet), welches wenigstens zwei seitliche Flanken bzw. Seitenflächen aufweist. Ein solches trapezförmiges Schalenelement weist viele Vorteile auf. Das trapezförmige Schalenelement ist aufgrund der geometrischen Verhältnisse sehr stabil und kann daher auch als Abstandshalter zwischen dem Grundmodul und der Traktionsbatterie bzw. dem Batteriegehäuse fungieren. Der Verbindungssteg des Trapezprofils zwischen den seitlichen Flanken kann so ausgebildet sein, dass dieser zugleich als Anlagefläche zur Traktionsbatterie bzw. zum Batteriegehäuse verwendet werden kann. Der Verbindungssteg kann außerdem Verschraubungselemente oder Ähnliches zur Befestigung des Unterfahrschutzes an der Traktionsbatterie bzw. am Batteriegehäuse aufweisen. Bei diesen Verschraubungselementen handelt es sich insbesondere um eingebettete bzw. umspritzte metallische Inserts. Ferner können die unteren Ausläufer des trapezförmigen Schalenelements als seitlich abstehende Flansche ausgeführt sein, die als Fügeflansche, insbesondere als Schweiß- oder Klebeflansche, zum Befestigen des Schalenelements am Grundmodul verwendet werden können.

Bevorzugt befindet sich in wenigstens einer der seitlichen Flanken des trapezförmigen Profil- bzw. Schalenelements, insbesondere in beiden seitlichen Flanken, wenigstens ein Überströmbereich. Dieser Überströmbereich ist insbesondere durch ein offenes Metalldrahtgitter oder Lochblech gebildet (wie obenstehend erläutert). Ein solcher Überströmbereich kann sich wenigstens über die Hälfte der axialen Länge des Schalenelements erstrecken. Ein solcher Überströmbereich kann über der axialen Längserstreckung des Profil- bzw. Schalenelements mit gleichbleibenden Abmessungen oder auch mit variablen, d. h. sich über der axialen Längserstreckung verändernden, Abmessungen ausgebildet sein.

Eine erfindungsgemäße Traktionsbatterieanordnung umfasst wenigstens eine Traktionsbatterie mit einem zur Aufnahme von Batteriemodulen oder dergleichen vorgesehenen Batteriegehäuse sowie wenigstens einen erfindungsgemäß ausgebildeten Unterfahrschutz, der (unter Ausbildung eines Entgasungsraums) unterhalb des Batteriegehäuses angeordnet und insbesondere auch am Batteriegehäuse befestigt ist.

Die Erfindung wird nachfolgend in nicht einschränkender Weise anhand der Figuren näher erläutert. Die in den Figuren gezeigten und/oder nachfolgend erläuterten Merkmale können, auch unabhängig von bestimmten Merkmalskombinationen, allgemeine Merkmale der Erfindung sein und die Erfindung entsprechend weiterbilden.
- Fig. 1: zeigt in einer perspektivischen Draufsicht einen erfindungsgemäßen Unterfahrschutz mit mehreren Entgasungskanälen.
- Fig. 2: zeigt den Querschnitt eines Entgasungskanals am Unterfahrschutz der Fig. 1.
- Fig. 3: zeigt analog zur Fig. 2 den Querschnitt des Entgasungskanals an einer anderen Querschnittsstelle mit einem Verschraubungspunkt.

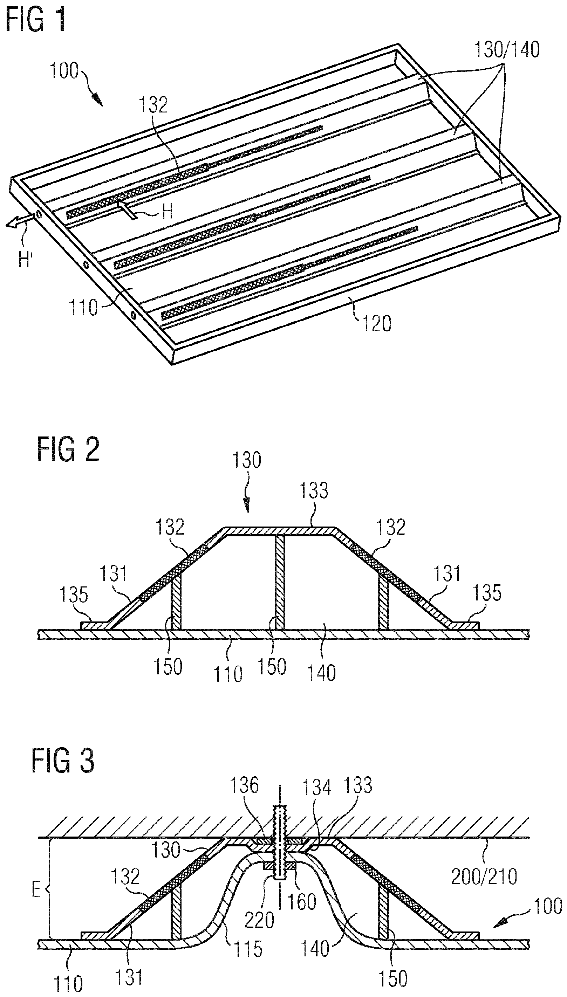

Der in Fig. 1 gezeigte Unterfahrschutz 100 weist ein schildartiges bzw. plattenartiges Grundmodul 110 auf, das mit einem umlaufenden kragenartigen Rand 120 ausgebildet ist. Das Grundmodul 110 kann nicht gezeigte Versteifungselemente und Abstandselemente (Abstandshalter) aufweisen. Das durch das Grundmodul 110 und den Rand 120 eingefasste Volumen bildet einen Entgasungsraum für eine Traktionsbatterie (siehe Fig. 3). Auf der in Fig. 1 sichtbaren Oberseite des Grundmoduls 110 sind mehrere Schalenelemente 130 angeordnet, die jeweils einen auf der Oberseite des Grundmoduls 110 verlaufenden Entgasungskanal 140 bilden, wobei die Entgasungskanäle 140 parallel zueinander angeordnet sind. Die Entgasungskanäle 140 sind zur Ausleitung von Heißgas H aus dem Entgasungsraum vorgesehen, wie für einen der Entgasungskanäle 140 durch zwei Pfeile (H, H') veranschaulicht. Hierzu sind die Schalenelemente 130 mit gasdurchlässigen Überströmbereichen 132 ausgebildet, wie nachfolgend noch näher erläutert.

Fig. 2 zeigt exemplarisch einen Querschnitt eines Entgasungskanals 140. (Die nachfolgenden Erläuterungen gelten analog für die anderen Entgasungskanäle 140.) Das Schalenelement 130 ist als trapezförmiges Profilelement ausgebildet, mit zwei seitlichen Flanken bzw. Seitenflächen 131, einem oberen Verbindungssteg bzw. Obergurt 133 sowie zwei unteren Ausläufern bzw. Untergurten 135, die als Fügeflansche fungieren, an denen das Schalenelement 130 bspw. mit dem Grundmodul 110 verklebt oder verschweißt ist. Das trapezförmige Schalenelement 130 bildet zusammen mit dem Grundmodul 110 einen Entgasungskanal 140, der einen geschlossenen, d. h. baulich vollständig umrandeten, trapezförmigen Querschnitt aufweist, wobei die durch das Schalenelement 130 gebildete Kanalwandung an der gezeigten Querschnittsstelle teilweise gasdurchlässig ist. Innerhalb des Entgasungskanals 140 sind Stützrippen und/oder Stützdome 150 zur Abstützung des Schalenelements 150 angeordnet. Die Stützrippen und/oder Stützdome 150 können auch eine Strömungslenkungsfunktion erfüllen. Die Abstützung erfolgt insbesondere auch in den nachfolgend erläuterten Überströmbereichen 132.

In beiden seitlichen Flanken 131 des Schalenelements 130 befinden sich sogenannte Überströmbereiche 132, die als gasdurchlässige Wandbereiche ein Überströmen von Heißgas H vom Entgasungsraum in den Entgasungskanal 140 ermöglichen, wie in Fig. 1 gezeigt (siehe Pfeil H). Das Schalenelement 130 ist als Kunststoff-Metall-Verbundbauteil ausgeführt, wobei die gasdurchlässigen Überströmbereiche 132 aus einem offenen (d. h. nicht überdeckten) Metalldrahtgitter oder offenen Lochblech gebildet sind. Es ist vorgesehen, dass es sich hierbei um metallische Einleger (Metalldrahtgitter- oder Lochblech-Einleger) handelt, die bei einer spritzgießenden Herstellung des Schalenelements 130 in dieses integriert werden, wie obenstehend erläutert.

Wie aus Fig. 1 ersichtlich, erstrecken sich die Überströmbereiche 132 in Längsrichtung eines Entgasungskanals 140 nicht über die gesamte Länge des trapezförmigen Schalenelements 130 und sind außerdem entlang des Schalenelements 130 mit variablen, sich über der axialen Längserstreckung des trapezförmigen Schalenelements 130 verändernden Abmessungen, womit insbesondere der Durchmesser in Höhenrichtung gemeint ist, ausgebildet. Dadurch wird eine an das Gesamtsystem angepasste lokale Gasdurchlässigkeit erzielt. Selbiges kann auch durch lokale Anpassung der Durchbrüche (Entgasungsdurchbrüche) realisiert werden. Die Überströmbereiche 132 in den beiden Flanken 131 eines trapezförmigen Schalenelements 130 können sowohl symmetrisch (im Sinne von form- und deckungsgleich) als auch asymmetrisch ausgebildet sein.

An der in Fig. 3 gezeigten Querschnittsstelle befindet sich ein Verschraubungspunkt, an dem der Unterfahrschutz 100 durch Verschraubung an einem Batteriegehäuse 210 einer Traktionsbatterie 200 befestigt ist. Entlang des Entgasungskanals 140 sind typischerweise mehrere solcher Verschraubungspunkte vorgesehen. Im Bereich des Verschraubungspunkts weist das Grundmodul 110 einen domartigen Einzug 115 auf. Der Verbindungssteg 133 ist mit einer Vertiefung 134 ausgebildet, in der ein Verschraubungselement 136 in Form einer Unterlegscheibe oder dergleichen angeordnet ist. Das Verschraubungselement 136 kann auch als sogenanntes (metallisches) Insert ausgebildet und in das Kunststoffmaterial des Schalenelements 130 eingebettet sein. Die Verschraubung erfolgt unter Einbindung des Schalenelements 130 mittels eines batterieseitigen Gewindebolzens 220 und einer unterseitig aufgeschraubten Mutter 160. Die Befestigung kann auch auf andere Weise erfolgen.

Aus der Darstellung der Fig. 3 geht ferner hervor, dass der Verbindungssteg 133 des Schalenelements 130 auch als Anlagefläche fungiert und entsprechend ausgebildet ist, ohne überstehendes Verschraubungselement 136. In Fig. 3 ist ferner der sogenannte Entgasungsraum erkennbar (siehe Bezugszeichen E).

## Patentansprüche

1. Unterfahrschutz (100) für eine Traktionsbatterie (200), mit einem schildartigen Grundmodul (110), welches unter Ausbildung eines Entgasungsraums (E) unterhalb der Traktionsbatterie (200) anordenbar ist,
wobei das Grundmodul (110) wenigstens ein auf seiner Oberseite angeordnetes Schalenelement (130) aufweist, welches einen auf der Oberseite verlaufenden Entgasungskanal (140) mit geschlossenem Querschnitt zur Ausleitung von Heißgas (H) aus dem Entgasungsraum (E) bildet,
wobei das Schalenelement (130) als Kunststoff-Metall-Verbundbauteil ausgebildet ist und wenigstens einen gasdurchlässigen Überströmbereich (132) aufweist, innerhalb dessen ein Überströmen des Heißgases (H) vom Entgasungsraum (E) in den Entgasungskanal (140) möglich ist,
**dadurch gekennzeichnet, dass**
das Schalenelement (130) als Spritzgussteil ausgebildet ist und der Überströmbereich (132) durch ein offenes Metalldrahtgitter oder durch ein offenes Lochblech gebildet ist, wobei das Metalldrahtgitter oder das Lochblech als umspritzter oder teilweise überspritzter Einleger in das Spritzgussteil integriert ist.

2. Unterfahrschutz (100) nach Anspruch 1,
**dadurch gekennzeichnet, dass**
das Schalenelement (130) mit dem Grundmodul (110) verklebt oder verschweißt ist.

3. Unterfahrschutz (100) nach einem der vorhergehenden Ansprüche,
**dadurch gekennzeichnet, dass**
im Entgasungskanal (140) Stützrippen und/oder Stützdome (150) zur Abstützung des Schalenelements (130) vorhanden sind.

4. Unterfahrschutz (100) nach einem der vorhergehenden Ansprüche,
**dadurch gekennzeichnet, dass**
das Schalenelement (130) als trapezförmiges Profilelement mit seitlichen Flanken (131) ausgebildet ist, wobei sich in wenigstens einer seitlichen Flanke (131) wenigstens ein Überströmbereich (132) befindet.

5. Unterfahrschutz (100) nach Anspruch 4,
**dadurch gekennzeichnet, dass**
der Überströmbereich (132) mit variablen Abmessungen ausgebildet ist.

6. Unterfahrschutz (100) nach Anspruch 4 oder 5,
**dadurch gekennzeichnet, dass**
der Verbindungssteg (133) zwischen den seitlichen Flanken (131) zugleich als Anlagefläche ausgebildet ist.

7. Unterfahrschutz (100) nach Anspruch nach 6,
**dadurch gekennzeichnet, dass**
der Verbindungssteg (133) Verschraubungselemente (136) zur Befestigung des Unterfahrschutzes (100) an der Traktionsbatterie (200) aufweist.

8. Traktionsbatterieanordnung, umfassend:
- eine Traktionsbatterie (200) mit einem Batteriegehäuse (210) zur Aufnahme von Batteriemodulen; und
- einen unterhalb des Batteriegehäuses (210) angeordneten Unterfahrschutz (100), der gemäß wenigstens einem der vorhergehenden Ansprüche ausgebildet ist.

## Claims

1. An underride protection (100) for a traction battery (200), with a shield-like base module (110), which can be arranged under the traction battery (200) with formation of a degassing chamber (E),
wherein the base module (110) has at least one shell element (130) arranged on its top, which forms a top-extending degassing channel (140) with a closed cross-section for discharging hot gas (H) from the degassing chamber (E),
wherein the shell element (130) is formed as a plastic-metal composite component and has at least one gas-permeable overflow region (132), within which an overflow of the hot gas (H) from the degassing chamber (E) into the degassing channel (140) is possible,
**characterized in that**
the shell element (130) is formed as an injection molded part and the overflow region (132) is formed by an open metal wire mesh or by an open perforated plate, wherein the metal wire mesh or the perforated plate is integrated into the injection molded part as an overmolded or partially overmolded insert.

2. The underride protection (100) according to claim 1,
**characterized in that**
the shell element (130) is glued or welded to the base module (110).

3. The underride protection (100) according to any one of the preceding claims,
**characterized in that**
support ribs and/or support domes (150) are present in the degassing channel (140) to support the shell element (130).

4. The underride protection (100) according to any one of the preceding claims,
**characterized in that**
the shell element (130) is formed as a trapezoidal profile element with lateral flanks (131), wherein at least one overflow region (132) is located in at least one lateral flank (131).

5. The underride protection (100) according to claim 4,
**characterized in that**
the overflow region (132) is designed with variable dimensions.

6. The underride protection (100) according to claim 4 or 5,
**characterized in that**
the connecting web (133) between the lateral flanks (131) is also formed as a contact surface.

7. The underride protection (100) according to claim 6,
**characterized in that**
the connecting web (133) has screw elements (136) for securing the underride protection (100) to the traction battery (200).

8. A traction battery arrangement, comprising:
- a traction battery (200) with a battery housing (210) to accommodate battery modules; and
- an underride protection (100) arranged under the battery housing (210), which is formed according to at least one of the preceding claims.

## Revendications

1. Protection anti-encastrement (100) pour une batterie de traction (200), avec un module de base (110) en forme d'écran qui peut être agencé en formant un espace de dégazage (E) en dessous de la batterie de traction (200),
dans laquelle le module de base (110) présente au moins un élément de coque (130) agencé sur son côté supérieur qui forme un canal de dégazage (140) s'étendant sur le côté supérieur avec une section transversale fermée pour l'évacuation de gaz chauds (H) hors de l'espace de dégazage (E),
dans laquelle l'élément de coque (130) est formé comme composant composite matière plastique-métal et présente au moins une zone de débordement perméable aux gaz, à l'intérieur de laquelle un débordement des gaz chauds (H) de l'espace de dégazage (E) dans le canal de dégazage (140) est possible,
**caractérisée en ce que**
l'élément de coque (130) est formé comme partie moulée par injection et la zone de débordement (132) est formée par une grille en fils métalliques ouverte ou par une tôle percée ouverte, dans laquelle la grille en fils métalliques ou la tôle percée est intégrée comme élément d'insertion enrobé ou partiellement surpulvérisé dans la partie moulée par injection.

2. Protection anti-encastrement (100) selon la revendication 1,
**caractérisée en ce que**
l'élément de coque (130) est collé ou soudé au module de base (110).

3. Protection anti-encastrement (100) selon l'une quelconque des revendications précédentes,
**caractérisée en ce que**
des nervures d'appui et/ou des dômes d'appui (150) sont présents dans le canal de dégazage (140) pour l'appui de l'élément de coque (130).

4. Protection anti-encastrement (100) selon l'une quelconque des revendications précédentes,
**caractérisée en ce que**
l'élément de coque (130) est formé comme élément profilé trapézoïdal avec des flancs latéraux (131), dans laquelle au moins une zone de débordement (132) se trouve dans au moins un flanc latéral (131).

5. Protection anti-encastrement (100) selon la revendication 4,
**caractérisée en ce que**
la zone de débordement (132) est formée avec des dimensions variables.

6. Protection anti-encastrement (100) selon la revendication 4 ou 5,
**caractérisée en ce que**
la nervure de liaison (133) est formée entre les flancs latéraux (131) en même temps comme surface d'appui.

7. Protection anti-encastrement (100) selon la revendication 6,
**caractérisée en ce que**
la nervure de liaison (133) présente des éléments de vissage (136) pour la fixation de la protection anti-encastrement (100) à la batterie de traction (200).

8. Ensemble de batterie de traction comprenant :
- une batterie de traction (200) avec un boîtier de batterie (210) pour la réception de modules de batterie ; et
- une protection anti-encastrement (100) agencée en dessous du boîtier de batterie (210) qui est formée selon au moins l'une quelconque des revendications précédentes.
